# EUROPÄISCHE PATENTSCHRIFT

(11) **EP 0 859 550 B1**
(45) Veröffentlichungstag und Bekanntmachung des Hinweises auf die Patenterteilung: **18.08.1999**
(21) Anmeldenummer: 96938949.3
(22) Anmeldetag: 26.09.1996
(51) Int. Cl.: A22C 17/04

(54) **MASCHINE ZUM AUTOMATISCHEN ENTBEINEN VON FLEISCHTEILEN, INSBESONDERE GEFLÜGELSCHENKEL**
MACHINE FOR AUTOMATICALLY BONING PIECES OF MEAT, IN PARTICULAR POULTRY THIGHS
MACHINE DE DESOSSAGE AUTOMATIQUE DE MORCEAUX DE VIANDE, NOTAMMENT DE CUISSES DE VOLAILLES

(30) Priorität: 26.09.1995 DE 19535646
(43) Veröffentlichungstag der Anmeldung: 26.08.1998
(73) Patentinhaber: Maja-Maschinenfabrik Hermann Schill GmbH, 77694 Kehl (DE)
(72) Erfinder: KRAUSE, Georg, D-31139 Hildesheim (DE); KRAUSE, Ulrich, D-31139 Hildesheim (DE)
(74) Vertreter: Schuster, Gregor, Dipl.-Ing.
(86) Internationale Anmeldenummer: DE9601830
(87) Internationale Veröffentlichungsnummer: WO9711608

(56) Entgegenhaltungen:
- EP-A- 0 465 258
- EP-A- 0 527 677
- WO-A-93/09675
- DE-U- 9 207 074
- DE-U- 9 309 847
- US-A- 4 446 600
- US-A- 5 173 076

## Beschreibung

Die Erfindung geht aus von einer Maschine zum automatischen Entbeinen von knochenhaltigen Fleischteilen, insbesondere Geflügelschenkeln, vorzugsweise Putenunterkeulen, nach der Gattung des Hauptanspruchs. Besonders bei Geflügelschenkeln und dort besonders bei Keulen, ist das Entbeinen erforderlich, um die Fleichanteile als Schnitzel oder dergleichen verarbeiten zu können. Hierbei ist von besonderer Bedeutung, daß keine Knochenteile, insbesondere Knochensplitter in den abgetrennten Fleischteilen verbleiben.

Es sind verschiedene Verfahren und Maschinen zum Entbeinen von knochenhaltigen Fleischteilen bekannt, bei denen jedoch immer wieder die Gefahr besteht, daß beim Entbeinen, besonders durch einen Entbeinstempel, Knochenbrüche auftreten und Knochensplitter in das Fleisch eindringen, die dann in mühsamer Handarbeit entfernt werden müssen.

Bei einer gattungsgemäßen bekannten Maschine zum automatischen Entbeinen (G 91 07 606) greift der Entbeinstempel nicht von der Schaftseite des Knochens her an diesem an, sondern von der Seite des Gelenkkopfes. Der Entbeinstempel schiebt dann den Knochen durch eine Durchtrittsöffnung eines Gegenhaltegliedes, wobei gleichzeitig das am Knochen anhaftene Fleisch abgestreift wird. Bei dieser bekannten Maschine wirkt das Gegenhalteglied mit zwei gegenläufig bewegbaren Schiebern zusammen, die jeweils eine Durchgangsöffnung aufweisen, wobei der durch die Überschneidung der beiden Durchgangsöffnungen sich ergebende Querschnitt jenen der Knochendurchtrittsöffnung bestimmt. Bei der Entbeinung werden zwei Querschnitte der Knochendurchtrittsöffnung festgelegt, nämlich eine solche mit kleinerem Querschnitt, in die ein Knochenschaft einsteckbar ist, wonach dann durch Eingriff des Entbeinstempels der Knochen in diese Knochendurchgangsöffnung hineingeschoben wird, wobei sich Fleischanteile vom Knochen lösen. Da sich beim Ausstoßvorgang des Knochens bereits das Fleisch vor den Schiebern gestaut hat, zum Teil unterstützt durch an den Schiebern angeordneten Messern, kann der Öffnungsquerschnitt durch Verschieben der Schieber vergrößert werden, so daß der Knochen vollends durchgedrückt werden kann, während das Fleisch durch die Schieber zurückgehalten wird. Durch diese Maschine ist auch bekannt, daß zu entbeinende Fleischteil in eine arbeitsgerechte Lage zu bringen, wofür eine Transporteinrichtung verwendet wird.

Bei diesen bekannten Maschinen bestehen lange Taktzeiten und ein relativ hoher manueller Bedienungsaufwand. Außerdem muß vor der Entbeinung eine Gelenkkugel eines Knochens abgesägt werden, um das Einfädeln in die Knochendurchtrittsöffnung zu ermöglichen.

Das Bemühen, eine Automatisierung beim Entbeinen von knochenhaltigen Fleischteilen zu erzielen, ist einer bekannten Maschine entnehmbar (DE-G 93 09 847), bei welcher ein Förderband mit der Entbeinungsvorrichtung kombiniert ist. Das Förderband ist als Gliederband ausgebildet und trägt mehrere Mitnehmer, die in konstantem Abstand auf dem Gliederband befestigt sind. Diese bekannte Entbeinungsmaschine weist eine Vielzahl einzelner Bearbeitungsstationen auf und ist sehr aufwendig konstruiert. Zudem ist die Entbeinleistung aufgrund der vielen Stationen verhältnismäßig gering. Besonders problematisch hat sich das Ausrichten der Fleischteile vor dem Entbeinen gezeigt.

Die erfindungsgemäße Maschine mit den kennzeichnenden Merkmalen des Hauptanspruchs hat demgegenüber den Vorteil, daß eine hohe Produktivität erzielbar ist mit einem Minimum an manuellem Aufwand und einem Minimum an Knochenbrüchen. Durch das Einstecken des Fleischteiles in die Durchtrittsöffnung erfolgt bereits eine Vorzentrierung. Durch das Verwenden des Schiebers gleichzeitig zum Festklemmen des Fleischteils bzw. des Knochens kann die sonst übliche und erforderliche Halterung eingespart werden, welche zusätzlich immer noch eine Vorrichtung erforderlich machte, durch die das Fleischteil in eine arbeitsgerechte Lage gebracht werden mußte.

Nach einer vorteilhaften Ausgestaltung der Erfindung sind zwei gegeneinander wirkende und zwischen ihren einander zugewandten Enden die Durchtrittsöffnung 4 bestimmende Klemmschieber 5 vorgesehen. Hierdurch ist das Fleischteil, insbesondere in Bezug auf den Entbeinstempel, besser zu zentrieren.

Nach einer weiteren vorteilhaften Ausgestaltung der Erfindung nimmt der Klemmschieber 5 beim Einstecken des Fleischteils 2 eine vorgegebene Stellung für eine entsprechend große Durchtrittsöffnung 4 ein und gibt beim Entbeinen innerhalb eines vorgegebenen Bereichs (III) elastisch nach für die Fleischabstreifwirkung. Während des Einsteckens nimmt somit die Durchtrittsöffnung einen maximalen Querschnitt ein, der dann verkleinert wird, um das Fleischteil zu halten, wobei wiederum die Klemmschieber so nachgiebig ausgestaltet sind, daß auch größere Knochenteile entsprechend der Nachgiebigkeit der Klemmschieber durchgedrückt werden können, bei entsprechender Aufrechterhaltung des Abstreifwirkung des Fleisches durch die Klemmschieber vom Knochen

Nach einer weiteren vorteilhaften Ausgestaltung der Erfindung ist eine Sägevorrichtung 8 vorhanden, mittels der vor der Entbeinung die durch die Durchtrittsöffnung gesteckten Knochenabschnitte (Gelenkteile) einschließlich der zwischen Knochen 6 und Fleischanteilen 2 befindlichen Sehnen abtrennbar sind. Mittels einer solchen Sägevorrichtung innerhalb der Maschine kann das vorherige manuelle Abtrennen eines Gelenkkopfes, bevor das Fleischteil in die Maschine eingelegt wird, eingespart werden. Hierdurch ist eine wesentliche Verbesserung des Automatisierungsgrades vom Entbeinen von Fleischteilen erzielbar.

Nach einer weiteren vorteilhaften Ausgestaltung der Erfindung spannt während des Sägevorgang der Klemmschieber 5 das Fleischteil 2 fest. Besonders beim Sägevorgang müssen die Fleischteile oder Knochen festgespannt sein, was vorteilhafterweise durch die erfindungsgemäßen Klemmschieber in einfachster Weise möglich ist.

Nach einer weiteren vorteilhaften Ausgestaltung der Erfindung ist jedes Gegenhalteteil 3 mit dazugehörigen Klemmschieber 5 Glied einer als Transportvorrichtung dienenden Kette 1 zur gleichzeitigen Entbeinung mehrerer Fleischteile 2. Obwohl der Einsatz von Gliederketten bei Entbeinmaschinen bekannt ist (DE-G 93 09 847) besteht bei der Erfindung der besondere Vorteil darin, daß keine zusätzliche Kette erforderlich ist, sondern ohnehin vorhandene Teile zu einer Gliederkette zusammengeschlossen sind, wobei als weiterer Vorteil der Knochen nach der Entbeinung aus dem Transportbereich der Kette entfernt ist, daß die Knochendurchtrittsöffnungen unmittelbar in der Kette vorhanden sind, während die abgetrennten Fleischteile auf der Transportkette liegenbleiben. Zudem können entsprechend mehrere Entbeinungsvorgänge nebeneinander stattfinden, nämlich je nachdem, wieviel Entbeinungsstempel in Transportrichtung nebeneinander vorgesehen sind und wieviele Durchtrittsöffnungen nacheinander mit Fleischstücken bestückt sind.

Nach einer weiteren vorteilhaften Ausgestaltung der Erfindung sind die einzelnen Klemmschieber 5 waagerecht und parallel zueinander angeordnet. Hierdurch können in sehr einfacher Weise die Fleischteile von oben eingesteckt und entsprechend bearbeitet werden.

Nach einer weiteren vorteilhaften Ausgestaltung der Erfindung sind die Klemmschieber 5 in Richtung größtem Querschnitt der Durchtrittsöffnung 4 weder belastet und für eine Querschnittsänderung bzw. den Klemmvorgang gegen die Federkraft verschiebbar. Hierdurch sind in Ausgangslage die Durchtrittsöffnungen voll geöffnet und das insbesondere manuelle Einstecken der Fleischteile unbehindert.

Nach einer weiteren vorteilhaften Ausgestaltung der Erfindung sind die Glieder der Kette 1 zu einer Unendlichkette zusammengeschlossen. Es ist zwar bekannt, eine Unendlichkette zu verwenden - eine solche Unendlichkette jedoch mit Gliedern aus Gegenhalteteilen und Klemmschiebern zu verwenden, besteht schon deshalb eine Voreingenommenheit gegenüber, weil die Klemmschieber alle einzeln betätigt werden müssen.

Nach einer weiteren vorteilhaften Ausgestaltung der Erfindung sind mindestens zwei Arbeitsbereiche (I und III) vorhanden, nämlich ein Einlegebereich (I), in dem die Fleischteile 2 in die Durchtrittsöffnungen 4 steckbar sind und ein der Entbeinung dienender Arbeitsbereich (III), in dem die Kettenglieder 3 für den jeweiligen Arbeitsvorgang in Art eines Arbeitstaktes stehen bleiben, um danach von einem Bereich (I, III) in den anderen und wieder zum einen Bereich fahren. Hierdurch ist es möglich, einen weitgehend willkürlich bestimmbaren Fertigungstakt zu wählen, während dem die Kette steht, so daß sowohl das Bestücken mit frischen Fleischteilen als auch das Entbeinen gleichzeitig stattfindet.

Nach einer weiteren diesbezüglichen vorteilhaften Ausgestaltung der Erfindung ist zwischen dem Einlegebereich (I) und dem Arbeitsbereich (III) ein Sägebereich (II) vorgesehen und während des Fahrens vom Einlegebereich (I) zum Arbeitsbereich (III) werden im Sägebereich (II) die durch die Durchtrittsöffnungen 4 ragenden Knochenabschnitte abgesägt. Hierbei wirkt sich vor allem der Vorteil aus, daß die eingesteckten Fleischteile mit den Knochen durch die Kette hindurchragen und von unterhalb der Kette problemlos abgesägt werden können.

Nach einer weiteren vorteilhaften Ausgestaltung der Erfindung ist im Sägebereich (II) mindestens eine Kreissäge 8 vorhanden, deren Sägeblatt parallel zu den Klemmschiebern 5 angeordnet ist. Statt einem Sägeblatt können vorteilhafterweise zwei Sägeblätter verwendet werden, mit gegenläufiger Drehrichtung, um somit die am Knochen angreifenden Reaktionskräfte zu verringern.

Nach einer weiteren vorteilhaften Ausgestaltung der Erfindung werden beim Durchfahren der Glieder 1, 3 durch den Sägebereich (II) die Klemmschieber 5 durch eine ortsfeste Kulisse 7 in Richtung Durchtrittsöffnung 4 verschoben, um das Fleischteil 2 festzuspannen. Besonders hier wirkt sich die erfindungsgemäße Ausgestaltung durch Verwendung einer Kette oder etwas dergleichen aus, in der Klemmschieber angeordnet sind, die automatisch durch die Kettenbewegung mittels einer Kulisse entgegen Federkraft verschoben werden können.

Nach einer weiteren vorteilhaften Ausgestaltung der Erfindung sind die Klemmschieber 5 während des Entbeinens durch eine elastische Führung 14 in Richtung Fleischteil 2 belastet. Diese elastische Führung wirkt der in Öffnungsrichtung an den Klemmschiebern angreifenden Federkraft entgegen und muß entsprechend größer sein, um die gewünschte Haltekraft zu erzielen, ohne das Durchstoßen größerer Knochenteile durch Unnachgiebigkeit zu behindern.

Nach einer weiteren vorteilhaften Ausgestaltung der Erfindung werden die ausgestoßenen Knochen 6 im Raum zwischen der Unendlichkette aufgenommen und die auf der Kette verbleibenden Fleischanteile im Wendebereich gesammelt und fallen aufgrund ihrer Schwerkraft von der Kette 1 ab. Unterhalb der Unendlichkette kann ein Behälter aufgestellt werden, in den diese Fleischanteile hereinfallen. Natürlich ist auch denkbar, daß die Fleischanteile über eine Abschabvorrichtung bereits im Wendebereich abgenommen werden.

Nach einer weiteren vorteilhaften Ausgestaltung der Erfindung weist die Entbeinvorrichtung eine Fleischteilzentrierung auf mit zwei gegeneinander verfahrbaren Zentrierungsschalen 9, durch die die Fleischteile 2 in eine arbeitsgerechte Lage stellbar sind. Durch eine solche Zentrierungseinrichtung wird erreicht, daß der auszustoßende Knochen mit dem Entbeinstempel fluchtet.

Nach einer weiteren vorteilhaften Ausgestaltung der Erfindung ist an mindestens einer der Zentrierungsschalen 9 nahe der Durchgangsöffnung 4 ein am Fleischteil angreifendes Messer 13 angeordnet. Durch ein solches Messer können vor allem weiter oben gelegene Sehnen der Fleischteile zusätzlich abgetrennt werden, insbesondere dann, wenn keine Säge vorhanden ist, durch die sowohl das bereits durch die Durchtrittsöffnung gesteckte Knochengelenk als auch die Fleischsehnen abgetrennt wurden.

Weitere Vorteile und vorteilhafte Ausgestaltungen der Erfindung sind der nachfolgenden Beschreibung, der Zeichnung und den Ansprüchen entnehmbar.

Ein Ausführungsbeispiel der Erfindung ist stark vereinfacht in der Zeichnung dargestellt und im folgenden näher beschrieben. Es zeigen:
- Fig. 1: eine Draufsicht einer Vorrichtung zum automatischen Entbeinen von Putenunterkeulen;
- Fig. 2: einen Querschnitt im Einlegebereich der Vorrichtung nach Fig. 1;
- Fig. 3: einen Querschnitt im Sägebereich der Vorrichtung nach Fig. 1 und
- Fig. 4: einen Querschnitt im Arbeitsbereich der Vorrichtung nach Fig. 1.

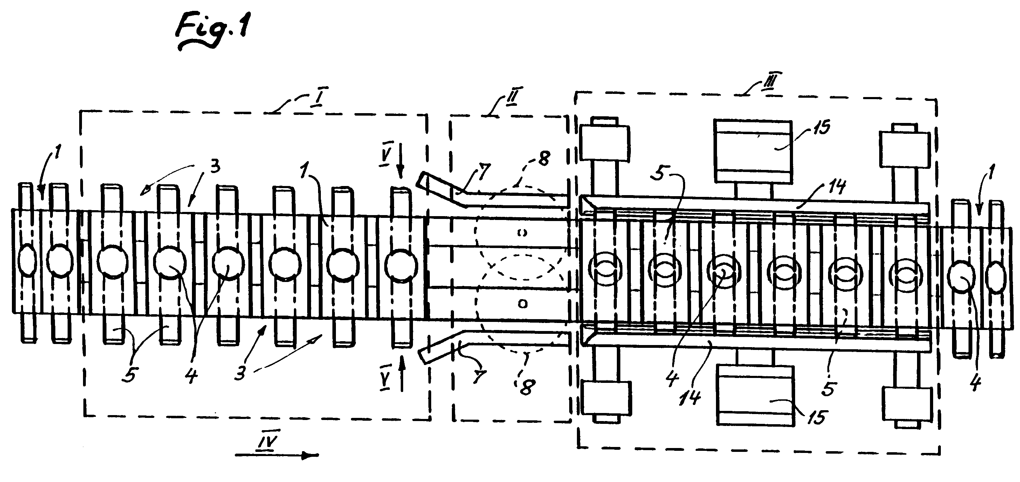

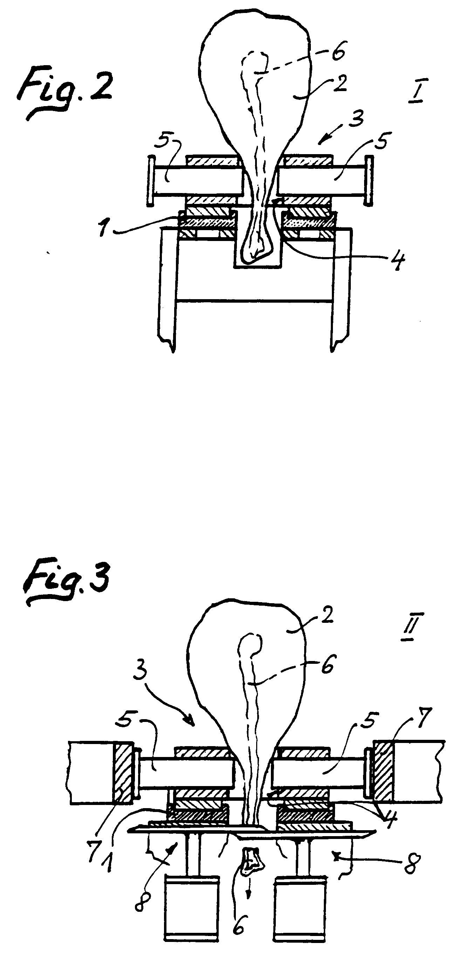

Die erfindungsgemäße, in den Figuren 1 bis 4 dargestellte Beschreibung des Ausführungsbeispiels weist ein getaktetes angetriebenes Gliederband 1 auf, welches sich in drei Bereiche unterteilen läßt, nämlich den Einlegebereich I, den Sägebereich II und den Arbeitsbereich III (Entbeinung). Die Vorrichtung arbeitet in zwei Takten. Während des einen Taktes werden im Einlegebereich I sechs Unterkeulen 2 eingelegt und es werden im gleichen Takt im Arbeitsbereich III sechs Unterkeulen 2 entbeint. Im zweiten Takt, der dem Weitertransport der Unterkeulen 2 aus dem Einlegebereich I in den Arbeitsbereich III entspricht, werden einerseits die Knochen im Sägebereich II abgetrennt (siehe weiter unten Schritt c) und andererseits die entbeinten Fleischteile entnommen (siehe Schritt f).

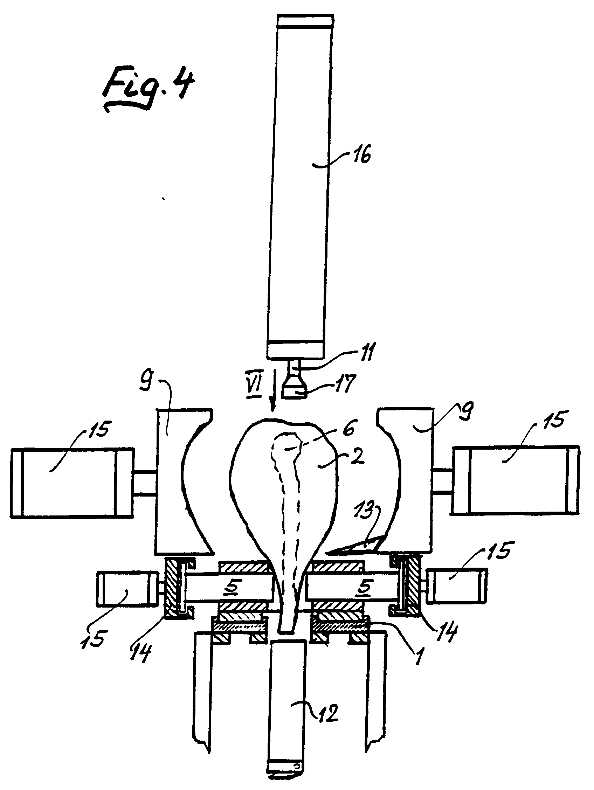

Der Einlegebereich 1 weist sechs Keulenhalter 3 auf, mit Aufnahmeöffnungen 4, in die Unterkeulen einsteckbar sind. Jeder Keulenhalter 3 besitzt zwei seitliche Klemmschieber 5 zum Festhalten und Einklemmen des unteren Teils bzw. des Knochens 6 der Unterkeule 2. Im folgenden wird die Vorrichtung anhand der für das Entbeinen durchzuführenden Schritte erläutert:
a) Es werden zunächst im Einlegebereich I sechs Unterkeulen 2 in die Keulenhalter 3 gesteckt;
b) bei der Transportbewegung des Gliederbandes 1 in Richtung des Pfeiles IV gelangen die sechs Keulenhalter 3 nacheinander in den Sägebereich II. Dort befinden sich zwei seitliche Zwangsführungen 7, die jeweils einen Anschlag für die Klemmschieber 5 bilden, welche dadurch in Richtung der Pfeile V nach innen bewegt werden (vgl. in Fig. 1 die Zone kurz vor dem Sägebereich II). Dadurch werden die Unterkeulen 2 zwischen zwei einander zugeordneten Klemmschiebern 5 festgeklemmt.
c) Im Sägebereich befinden sich zwei Kreissägen 8, mit denen der untere Teil der Knochen 6 abgesägt wird. Dies ist ein wichtiger Vorgang, weil dabei die Sehne bzw. das Gelenk vollständig abgetrennt wird, was für die nachfolgende Entbeinung von Bedeutung ist. Wenn nämlich die Sehnen nicht entfernt werden, bereitet dies bekanntlich erhebliche Probleme bei der Entbeinung. Bisher erfolgte das erforderliche Absägen in aufwendiger Weise in einem separaten Arbeitsgang von Hand, oder man hat auf das Absägen verzichtet, wobei dann jedoch Probleme beim Entbeinen wegen der noch vorhandenen Sehnen aufgetreten sind. Das bei der Erfindung vorgesehene Absägen ist in Fig. 3 vereinfacht dargestellt.
d) Im Arbeitsbereich III erfolgt zunächst - wie Fig. 4 entnehmbar - eine Zentrierung der Unterkeulen 2 durch seitliche Zentrierungsschalen 9, die sich von beiden Seiten her auf die Unterkeule 2 zubewegen. Der Zweck dieser Zentrierung besteht darin, die Knochen 6 in eine exakte Arbeitsposition für beim Entbeinen wirksam werdende Ausstoßstangen 11 zu bringen. Die Knochen 6 sollen dadurch eine exakte und zu der Transportrichtung IV senkrechte Lage einnehmen, auch um den herausgestoßenen Knochen 6 in ein unterhalb des Gliederbands 1 befindliches Auswurfrohr 12 zu leiten. An einer der beiden Zentrierungsschalen 9 ist kurz oberhalb der Aufnahmeöffnung 4 ein Messer 13 angeordnet, um die Unterkeule längs auf einer Seite für die nachfolgende Bearbeitung aufzuschneiden um das Fleischstück entsehnen zu können.
   Während im Sägebereich II die Klemmschieber 5 der Keulenhalter 3 zwangsgesteuert und unnachgiebig sind, findet im Arbeitsbereich III eine nachgiebige Belastung der Klemmschieber durch eine elastische Führung 14 bzw. durch die Einwirkung von nachgiebigen Zylindern 15 statt. Die Klemmschieber 5 sind dabei durch die Zylinder 15 mit einer nachgiebigen nicht starren Kraft beaufschlagt. Durch die elastische Führung 14 wird eine Anpassung an unterschiedliche Knochengrößen möglich.
e) Der nächste Schritt beim Entbeinen ist der eigentliche Knochenausstoß, mit Hilfe der Ausstoßstange 11, welche mittels eines Arbeitszylinders in Richtung des Pfeiles VI nach unten bewegt wird. Dabei drückt ein Kopf 17 der Ausstoßstange 11 gegen das obere Ende der Knochen 6, um diese ins Auswurfrohr 12 zu werfen.
f) Die Fleischentnahme erfolgt, indem das vom Knochen befreite Fleisch und nachdem das Gliederband - wie in Fig. 1 am äußeren Ende erkennbar - umgelenkt worden ist, in einen Behälter herunterfällt und dort entnommen werden kann.

Es sind aber nur zwei Arbeitstakte erforderlich. Der erste Takt besteht im Einlegen von sechs Unterkeulen im Einlagebereich I und der gleichzeitigen automatischen Entbeinung im Arbeitsbereich III, jeweils bei stillstehendem Gliederband 1. Der zweite Takt findet statt während sich das Gliederband 1 weiterbewegt, wobei die Unterkeulen 2 den Sägebereich II passieren, in dem die Knochen abgesägt werden und wobei die im Arbeitsbereich III abgetrennten Fleischteile durch das nach unten wandern des Gliederbandes 1 durch die Schwerkraft in einen Behälter fallen. Danach steht das Gliederband 1 für den ersten Takt still. Während jetzt im Arbeitsbereich III die sechs Unterkeulen 2 entbeint werden, können gleichzeitig im Einlegebereich I sechs neue Unterkeulen 2 eingelegt werden.

### Bezugszahlenliste

- 1: Gliederband
- 2: Unterkeulen
- 3: Keulenhalter
- 4: Aufnahmeöffnung
- 5: Klemmschieber
- 6: Knochen
- 7: Zwangsführung
- 8: Kreissägen
- 9: Zentrierungsschalen
- 10:
- 11: Ausstoßstangen
- 12: Auswurfrohr
- 13: Messer
- 14: Führung
- 15: Zylinder
- 16: Arbeitszylinder
- 17: Kopf
- I: Einlegebereich
- II: Sägebereich
- III: Arbeitsbereich
- IV: Transportrichtung
- V: Verschieberichtung 4 und 5
- VI: Arbeitsrichtung bei Auswurf

## Patentansprüche

1. Maschine zum automatischen Entbeinen von knochenhaltigen Fleischteilen, insbesondere Geflügelschenkeln
- mit einer Entbeinvorrichtung, welche mit einem fremdangetriebenen Entbeinstempel ((11), (17)) und einem eine Durchtrittsöffnung (4) für den Knochen (6) aufweisenden Gegenhalteglied (1), (3) arbeitet, wobei der Knochen (6) beim Entbeinen durch die Durchtrittsöffnung (4) gestoßen wird und der Querschnitt der Durchtrittsöffnung (4) durch einen Schieber (5) bestimmbar ist und
- mit einer Transporteinrichtung, welche eine Halterung (3) und Führung aufweist, zur Bestimmung einer für das Entbeinen arbeitsgerechten Lage der Fleischteile und wobei die Transporteinrichtung die abgetrennten Fleischteile weitertransportiert,
dadurch gekennzeichnet,
- daß das Gegenhalteglied (1) mit dem Schieber (5) gleichzeitig als Halterung (3) der Fleischteile (2) dient und
- daß nach Einstecken eines einen Knochen (6) aufweisenden Abschnitts geringeren Durchmessers des Fleischteils (2) in die Durchtrittsöffnung (4) das Fleischteil (2) durch den Schieber (5) festklemmbar ist.

2. Maschine nach Anspruch 1, dadurch gekennzeichnet, daß zwei gegeneinander wirkende und zwischen ihren einander zugewandten Enden die Durchtrittsöffnung (4) bestimmende Klemmschieber (5) vorgesehen sind.

3. Maschine nach Anspruch 1 oder 2, dadurch gekennzeichnet, daß der Klemmschieber 5 beim Einstecken des Fleischteils (2) eine vorgegebene Stellung für eine entsprechend große Durchtrittsöffnung (4) einnimmt und beim Entbeinen innerhalb eines vorgegebenen Bereichs (III) elastisch nachgibt für die Fleischabstreifwirkung.

4. Maschine nach einem der vorhergehenden Ansprüche, dadurch gekennzeichnet, daß eine Sägevorrichtung (8) vorhanden ist, mittels der vor der Entbeinung die durch die Durchtrittsöffnung gesteckten Knochenabschnitte (Gelenkteile) einschließlich der zwischen Knochen (6) und Fleischanteilen (2) befindlichen Sehnen abtrennbar sind.

5. Maschine nach Anspruch, dadurch gekennzeichnet, daß während des Sägevorgangs der Klemmschieber (5) das Fleischteil (2) festspannt.

6. Maschine nach einem der vorhergehenden Ansprüche, dadurch gekennzeichnet, daß jedes Gegenhalteteil (3) mit dazugehörigem Klemmschieber (5) Glied einer als Transportvorrichtung dienenden Kette (1) ist, zur gleichzeitigen Entbeinung mehrerer Fleischteile (2).

7. Maschine nach Anspruch, dadurch gekennzeichnet, daß die einzelnen Klemmschieber (5) waagerecht und parallel zueinander angeordnet sind.

8. Maschine nach Anspruch 6 oder 7, dadurch gekennzeichnet, daß die Klemmschieber (5) in Richtung größtem Querschnitt der Durchtrittsöffnung (4) weder belastet sind und für eine Querschnittsänderung bzw. den Klemmvorgang gegen die Federkraft verschiebbar sind.

9. Maschine nach einem der Ansprüche 6 bis 8, dadurch gekennzeichnet, daß die Glieder der Kette (1) zu einer Unendlichkette zusammengeschlossen sind.

10. Maschine nach einem der vorhergehenden Ansprüche, dadurch gekennzeichnet, daß mindestens zwei Arbeitsbereiche (I und III) vorhanden sind, nämlich ein Einlegebereich (I), in dem die Fleischteile (2) in die Durchtrittsöffnungen (4) steckbar sind und ein der Entbeinung dienender Arbeitsbereich (III), in denen die Kettenglieder (3) für den jeweiligen Arbeitsvorgang in Art eines Arbeitstaktes stehen bleiben um danach von einem Bereich (I, III) in den anderen und wieder zum einen Bereich fahren.

11. Maschine nach Anspruch 10, dadurch gekennzeichnet, daß zwischen dem Einlegebereich (I) und dem Arbeitsbereich (III) ein Sägebereich (II) vorgesehen ist, und daß während des Fahrens vom Einlegebereich (I) zum Arbeitsbereich (III) im Sägebereich (II) die durch die Durchtrittsöffnungen (4) ragenden Knochenabschnitte abgesägt werden.

12. Maschine nach Anspruch 10, dadurch gekennzeichnet, daß im Sägebereich (II) mindestens eine Kreissäge (8) vorhanden ist, deren Sägeblatt parallel zu den Klemmschiebern (5) angeordnet ist.

13. Maschine nach einem der Ansprüche 11 oder 12, dadurch gekennzeichnet, daß beim Durchfahren der Glieder (1), (3) durch den Sägebereich (II) die Klemmschieber (5) durch eine ortsfeste Kulisse (7) in Richtung Durchtrittsöffnung (4) verschoben werden, um das Fleischteil (2) festzuspannen.

14. Maschine nach einem der Ansprüche 11 bis 13, dadurch gekennzeichnet daß die Klemmschieber (5) während des Entbeinens durch eine elastische Führung (14) in Richtung Fleischteil (2) belastet sind.

15. Maschine nach einem der Ansprüche 9 bis 14, dadurch gekennzeichnet, daß die ausgestoßenen Knochen (6) im Raum zwischen der Unendlichkette aufgenommen werden, und daß die auf der Kette verbleibenden Fleischanteile im Wendebereich und aufgrund ihrer Schwerkraft von der Kette (1) abfallen und gesammelt werden.

16. Maschine nach einem der vorhergehenden Ansprüche, dadurch gekennzeichnet, daß die Entbeinvorrichtung eine Fleischteilzentrierung aufweist mit zwei gegeneinander verfahrbaren Zentrierungsschalen (9), durch die die Fleischteile (2) in eine arbeitsgerechte Lage stellbar sind.

17. Maschine nach Anspruch 16, dadurch gekennzeichnet, daß an mindestens einer der Zentrierungsschalen (9) nahe der Durchgangsöffnung (4) ein am Fleischteil angreifendes Messer (13) angeordnet ist.

## Claims

1. Device for automatical boning of bony parts of meat, in special poultry thighs
- with a boning device, working with a separately driven boning piston (11) and a counterholding member (1), (3) installed with a cutaway (4)for the bone (6), whereas the bone (6) is pushed through the opening (4)during boning, the cross section of the cutaway (4) is determined by a slide (5), and
- with a transporting device, having a holder (3) and guidance for determination of a position suitable for boning the meat parts, and whereas the transporting device carries the cut pieces of meat,
designated as far as,
- the counter-holding member (1) at the same time serves as holder (3) of the pieces of meat (2) with the slide (5), and
- after inserting a section showing a bone (6) of an inferior diameter than the piece of meat (2) that can be fixed (2) into the cutaway (4) through the slide (5).

2. Device according to Title 1, designated as far as two counterworking clamp slides (5), controlling the cutaway (4) between their endings facing each other, are foreseen.

3. Device according to Title 1 or 2, designated as far as the clamp slide (5) when inserting the piece of meat (2) takes a foreseen position for a resp. large passing (4), and when boning within a given area (III) yieldt flexible as to the efficacy on meat stripping.

4. Device according to one of the preceding Titles, designated as far as a sowing mechanism (8) is installed by which the vor der 'boning die durch die cutaway sticked sections of bones (pieces of legs) incl. the sinows between bones (6) and the pieces of meat (2) are separated.

5. Device according to Title 4, designated as far as during the sowing proceding the clamp slider (5) clamps the piece of meat (2).

6. Device according to one of the preceding Titles, designated as far as each counterholder (3) with belonging clamping slide (5) member of a as transportation system serving chain (1) for simultaneous boning several pieces of meat (2).

7. Device according to Title 6, designated as far as the different clamp sliders (5) are installed horzontal and parallel to each other.

8. Device according to Title 6 or 7, designated as far as the clamp slider (5) in direction größtem cross section of the cutaway (4) nor charged and manouvrable for a change of cross section resp.the clamping proceding against the spring crate.

9. Device according to one of the Titles 6 to 8, designated as far as the chain gliders (1) are combined to a infinite conveying chain.

10. Device according to one of the preceding Titles, designated as far as at least two working sections (I u III) are available, i.e. an insertion part (I), in which the pieces of meat (2) in the cutaways (4) can be sticked and a the boning serving working place (III), in which the chain members (3) for each the corresponding working procedures in Arat of a working tract remain, for later to drive from one section (I,III) into the other and back again to the latter section.

11. Device according to Title 10, designated as far as between the insertion area (I) and the working section (III) is previewed a sowing section (II) and that during driving from the insertion area (I) to the working section (III) within the sowing area (II) the bone parts produing the cutaway (4) are sown.

12. Device according to Title 10, designated as far as within the sowing area (II) has at least one rotating sew (8), which the sewing blade positioned parallel to the clamp sliders (5).

13. Deviceaccording to one of the Titles 11 or 12, designated as far as beim passing the members (1, 3 through the sewing area (II) the clamping slides (5) durch eine ortsfeste Kulisse (7) in direction of the cutaway (4) be moved, in order to tighten the piece of meat (2).

14. Device according to Titles 11 to 13, designated as far as the clamp sliders (5) are charged during boning by an elastic guidance (14) in direction of the pieces of meat (2).

15. Device according to one of the Titles 9 to 14,designated as far as the ausgestoßenen bones (6) are picked up in the space between the infinite chain, the remaining portions of meat remaining on the chain can fall up in the turning area, because of theigravity fall off the chain (I) and can be collected.

16. Device according to one the the preceding Titles, designated as far as the boning device has a centering ot the piece of meat with two against each other movable centering dishes (9), by which the pieces of meat (2) are adjustable into a suitable working positon.

17. Device according to Title 16, designated as far as at least one of the centering dishes (9) close to the cutaway (4) is installed at the knife (13) attacking the piece of meat

## Revendications

1. Dispositif pour le desossage automatique de morceaux de viande osseux, en particulier des cuisses de volailles :
- avec un dispositif de l'esossage, qui travaille avec un piston de desossage (11) excité externement et un élement à soutien (1) (3) avec une ouverture de passage (4) pour l'os (6), lorsque l'os (6) sera poussé par le passage (4) lors du desossage, et le diamètre du passage (4) soit déterminable par un glissoir (5.
- avec un system de transport, contenant un support (3) et une guide pour déterminer une position juste pour le desossage des morceaux de viande, lorsque le dispositif de transport emporte les morceaux de viande coupés;
caractérisé du fait que,
- l'élément retenu (1) avec le glissosir (5) serve de soutien (3) de morceaux de viande (2) en même temps;
- après l'insertion d'un os (6) avec un diamètre plus inférieur que le morceau de viande (2) le morceau de viande soit serrable dans le passage (4) par moyen du glissoir (5).

2. Dispositif selon Titre 1, caractérisé du fait qu'on a prévus deux glissoirs de serrage (5), déterminant l'ouverture de passage (4) entre ses bouts contreeffectifs.

3. Dispositif selon Titre 1 ou 2, caractérisé du fait que le glissoir de fixation (5) lors de l'insertion du morceau de viande (2) prend une position prévue en se qui concerne un passage (4) assez grand, et qui relache élastiquement lors du desossage parmi une section (III) prévue pour l'efficacité du stripage de viande.

4. Dispositif selon un des Titres précédents, caractérisé du fait qu'il existe un dispositif de sciage (8), qui - avant le desossage - perment de détacher les parties des os (jambes) et des tendons entre les os (6) et les portions de viande (2) mis par le passage.

5. Dispositif selon Titre 4, caractérisé du fait que le glissoir de fixation (5) serre le morceau de viande (2) pendant le sciage.

6. Dispositif selon un des Titres précédents, caractérisé du fait que chaque barre opposée (3) avec glissoir de serrage (5) respectif est membre d'une chaîne, servant de dispositif de transport (1) pour le desossage de plusieur morceaux de viande en même temps (2).

7. Dispositif selon Titre 6, caractérisé du fait que les variants glissoirs de serrage (5) soit installés horizontalement l'un à l'autre.

8. Dispositif selon Titre 6 ou 7, caractérisé du fait que le glissoir de serrage (5) vers le diamètre le plus grand du passage (4) ni soit chargé, mais soit prêt à glisser pour un changement de diamètre, respectivement le serrage contre le contact de ressort.

9. Dispositif selon un des Titres 6 à 8, caractérisé du fait que les glissoirs de la chaîne (1) sont fermés en chaîne infinie.

10. Dispositif selon un des Titres précédents, caractérisé du fait qu'il y a au moins deux zone de travail (I et III), i.e. un rayon d'insertion (I), qui permet introduire les morceaux de viande (2) dans les ouvertures du passage (4)avec un une zone (III) servant le desossage. Les membres de la chaîne (3) y restent fix dans chancun des procédés en sense d'un tracte de travail pour enfin continuer de l'une des zones de travail (I, III) à l'autre et de retour au rayon.

11. Dispositif selon Titre 10, caractérisé du fait qu'on a prévue une zone de sciage (II) entre le rayon de l'insertion (I) et la zone de travail (III), et pendant la conduite du rayon d'insertion (I) à la zone (III) dans la zone de sciage (II) soient coupés les morceaux de viande qui saillient les ouvertures de passages (4).

12. Dispositif selon Titre 10, caractérisé du fait qu'il existe au moins une scie rotative (8) dans la zone de sciage (II) (8), dont la lame est installée parallèle aux glissoirs de serrage (5).

13. Dispositif selon un des Titres 11 ou 12, caractérisé du fait que les glissoirs de serrage (5) soient déplacés par une coulisse permanente (7) en direction du passage (4) lors du passage des membres (1, 3 ) par la zone de sciage (II) pour fixer le morceau de viande (2).

14. Dispositif selon un des Titres 11 à 13, caractérisé du fait que les glissoirs de serrage (5) soient chargés par une guide élastique (14) pendant le desossage (14) en direction du morceau de viande (2).

15. Dispositif selon un des Titres 9 à 14, caractérisé du fait que les os lances (6) pouvant être saisis dans la zone entre la chaîne infinie et les morceaux de viande restant sur la chaîne, puis tombent de la chaîne (I) à cause de la gravité dans le resort de tournement pour être collecter.

16. Dispositif selon un des Titres précédents, caractérisé du fait que le dispositif de dosossage comprend un centrage des morceaux de viande avec deux coupes de centre (9), movable à l'opposés pour faciliter que les morceaux de viande (2) soient positionable dans une juste zone de travail.

17. Dispositif selon Titre 16, caractérisé du fait qu'il existe au moins un couteau mordant (3) monté sur l'un des coupes centrés (9) près du passage (4).
